# EUROPEAN PATENT SPECIFICATION

(11) **EP 0 919 713 B1**
(45) Date of publication and mention of the grant of the patent: **16.06.2004**
(21) Application number: 98309722.1
(22) Date of filing: 26.11.1998
(51) Int. Cl.: F02D 41/40, F02D 41/14

(54) **Controlsystem for a direct injection-spark ignition engine**
Steuersystem für eine funkgezündete Brennkraftmaschine mit Direkt-Einspritzung
Système de commande d'injection directe dans un moteur à combustion à allumage commandé

(30) Priority: 26.11.1997 JP 32473097; 29.09.1998 JP 27462898
(43) Date of publication of application: 02.06.1999
(73) Proprietor: Mazda Motor Corporation, Aki-gun Hiroshima-ken (JP)
(72) Inventor: Nishimura, Hirofumi, Hiroshima-shi, Hiroshima (JP); Kuji, Youichi, Hiroshima-shi, Hiroshima (JP)
(74) Representative: Messulam, Alec Moses

(56) References cited:
- EP-A- 0 661 432
- WO-A-96/22457
- DE-A- 19 636 507
- US-A- 5 479 775
- PATENT ABSTRACTS OF JAPAN vol. 012, no. 152 (M-695), 11 May 1988 (1988-05-11) & JP 62 271940 A (TOYOTA MOTOR CORP), 26 November 1987 (1987-11-26)

## Description

The invention relates to an engine control system for a direct injection-spark ignition type of engine equipped with a lean NOx conversion catalyst in the exhaust line, and, in particular, to a direct injection-spark ignition engine control system which operates the engine with a fuel charge chanced between lean and rich.

Engine control system of this type incorporate in an exhaust line a NOx adsorbing type of lean NOx conversion catalyst which, on one hand, adsorbs NOx in the exhaust gas while the air-fuel mixture is leaner than a stoichiometric mixture (λ > 1) and, on the other hand, desorbs or releases the NOx into exhaust gas for catalysing reduction of the NOx while the air-fuel mixture is richer than a stoichiometric mixture (λ < 1). As is known from, for example, International Patent Application WO93/07363, such an engine control system controls the engine to operate with an enriched mixture under accelerating conditions or full loading operating conditions and with a lean mixture under the remaining operating conditions, so as to improve fuel consumption.

An engine control system for a direct injection-spark ignition type of engine known from, for example, Japanese Unexamined Patent Publication 7-119507 controls the engine to cause stratified charge combustion in a lower engine loading zone and homogeneous charge combustion in a high engine loading zone. While the engine operates with lower speeds in the high loading zone, a given amount of fuel is delivered in two steps through early and late split injection in a intake stroke, so as to diffuse a first half of fuel sprayed through the early split injection in the combustion chamber before the end of a intake stroke and the second half of fuel in the combustion chamber with its volume increased, This prevents a generation of rich or dense mixture over the top of a piston in a subsequent compression stroke that generally occurs when a given amount of fuel is sprayed all at once through non-split Injection, which is desirable to prevent generation of smoke.

Another engine control system for a direct injection-spark ignition engine co-operates with a fuel injector which is direct to face the top of a piston and energised to spray a small amount of fuel preparatorily at the beginning of a intake stroke when the engine causes knocking. The fuel partly sticks to the top wall of the piston on a side of an intake port and bounces off the piston wall toward the intake port to cool the piston head and the combustion chamber on the intake port side with the heat of vaporisation of the fuel. Such an engine control system is known from, for example, Japanese Unexamined Patent Publication 7-217478.

In addition, European patent application EP-A-0 611 432 discloses an apparatus for and method for controlling an internal combustion engine that is equipped with exhaust gas recirculation means and fuel injection means for performing fuel injection in two parts in the front half of an intake stroke and the later half of an intake stroke, respectively, in the zone of higher engine loadings. Further WO96/2245 discloses an exhaust gas cleaning method for an internal combustion engine that performs fuel injection in both intake stroke and compression stroke while the NOx conversion catalyst releases NOx.

A lean NOx conversion catalyst disposed in an exhaust line as described in the International Patent Application WO93/07363 declines its NOx conversion performance as the temperature of exhaust gas rises. In particular, a NOx adsorption type of lean NOx conversion catalyst shows significant aggravation of NOx conversion performance. In order to keep or enhance the NOx conversion performance, it is desirable to increase combustion velocity of fuel by improving the homogeneity of fuel distribution in the combustion chamber and drop the temperature of exhaust gas as low as possible by rising the combustion efficiency of fuel mixture. However, these demands are not satisfied in the present circumstances.

It is an objective of the invention to provide an engine control system for a direct injection-spark ignition type of engine which rises a combustion velocity of fuel by providing an improved homogeneous distribution of the fuel with an effect of raising combustion efficiency so as to drop the temperature of exhaust gas as low as possibly.

The foregoing object of the present invention are achieved by providing An engine control system for a direct injection-spark ignition type of engine which is equipped with a fuel injector for spraying fuel directly into a combustion chamber and an exhaust system having a catalyst for purifying exhaust gas, and fuel injection control means for dividing a given amount of fuel into two parts and controlling said fuel injector to deliver intermittently said two parts of fuel through early and late split injection respectively in an intake stroke of a cylinder piston, characterized in that said fuel injection control means controls said fuel injector so that a midpoint between points at which said early and late split injection are timed respectively to start is before a midpoint of the intake stroke of the cylinder piston, that is to say, at a crank angle of 90 degrees.

According to the a preferred embodiment, while a part of fuel delivered through the early split injection is sufficiently diffused sufficiently homogeneously in the combustion chamber whose volume increases as the piston moves down before the late split injection is started, another part of fuel subsequently delivered through the late split injection is diffused and made homogeneous in the combustion chamber whose volume has sufficiently increased. In consequence, a homogeneous fuel mixture is generated in the combustion chamber with an effect of increasing combustion velocity and combustion efficiency in a combustion stroke, providing a drop in exhaust gas temperature. The control in which fuel injection is made such that the midpoint between points at which the early and late split injection are timed respectively to start is before the midpoint of a intake stroke provides various prominent effects described below.

On condition that a given amount of fuel has to be injected within an entire intake stroke, the early split injection can be timed to be caused at a point at which the piston moves down at a relatively high speed, which is accompanied by generation of a strong intake air stream, accelerating accomplishment of a homogeneous distribution of fuel mixture and evaporation of fuel. The early and late split injection is off as one whole to the early side of a intake stroke and, in consequence, fuel delivered through the late split injection sticks to a cylinder wall near when the piston reaches its bottom-dead-centre (at the end of a intake stroke), so as to evade tardy accomplishment of a homogeneous distribution of fuel mixture. In addition, there is certainly provided a long period of time allowed for a fuel mixture to evaporate before spark ignition of the fuel mixture and a rise in intake air temperature by recirculated exhaust gas, which are always desirable for acceleration of fuel evaporation. These effects mutually affect one another to produce a greatly improved homogeneous distribution of fuel and significantly improving combustion efficiency of fuel mixture due to a shortened combustion time, lowering the temperature of exhaust gas.

In the zone other than the lower engine loading zone, the engine control system may control the engine to operate with a fuel mixture enriched to be λ < 1 while the engine is in a cold condition as well as in a warm condition. Even while the engine is in a cold condition where fuel is slow of evaporation and combustion, the split injection in a intake stroke makes fuel acceleratingly evaporate with an effect of improving combustibility of an enriched fuel mixture. Further, in the zone other than the lower engine loading zone, the engine control system may control the engine to operate with a fuel mixture of λ > 1 while the engine is in a warm condition. This provides an improved homogeneous distribution of fuel sufficient to expand a limit of air-fuel ratio for a lean fuel mixture, lowering specific fuel consumption and the amount of NOx formation. The split injection may be made during an engine start, which is desirable to accelerate evaporation of fuel and prevents the engine from being operated with an overly enriched fuel mixture during a start, so that both startability of the engine and combustibility of lean fuel mixture are realised.

According to another embodiment of the invention, the engine control system further co-operates with an exhaust gas recirculation system to admit exhaust gas into an intake air stream introduced into the engine while the split injection is made. Because of the improved combustibility of fuel due to the split injection, a large amount of exhaust gas can be recirculated into the combustion chamber, providing a drop in pumping loss sufficiently to lower specific fuel consumption and the temperature of exhaust gas. The exhaust gas recirculation rate may be increased up to 10 to 40 %.

The fuel injector disposed off a vertical axis of the combustion chamber sprays fuel in a direction intersecting the vertical axis at an angle, so as to make it easy to stratify a fuel mixture with an effect of improving combustibility of the fuel mixture. Further, the engine control system may incorporate an air stream control means operative to create an air stream in the combustion chamber to accelerate accomplishment of a homogeneous distribution of fuel.

According to another embodiment of the invention, the engine control system co-operates with a direct injection-spark ignition type of engine which is equipped with an exhaust system having a lean NOx conversion catalyst for lowering an emission level of nitrogen oxides (NOx) in exhaust gas at an air-fuel ratio of λ > 1 and controls the engine to operate with a fuel charge of λ < 1 in a zone of partial engine loading. The control system, while the engine is in the partial engine loading zone, divides a given amount of fuel into two parts, desirably two substantially equal parts, which are intermittently delivered through early and late split injection respectively in a intake stroke. The fuel injector is energised such that the midpoint between points at which the early and late split injection are timed respectively to start is before the midpoint of a intake stroke.

According to still another embodiment of the invention, the engine control system co-operates with a direct injection-spark ignition type of engine which is equipped with an exhaust system having a lean NOx conversion catalyst for lowering an emission level of nitrogen oxides (NOx) in exhaust gas at an air-fuel ratio of λ > 1 and an exhaust gas recirculation system operative to circulate exhaust gas partly into the intake system from said exhaust system and controls the engine to operate with a lean fuel charge in a zone of partial engine loading and with a fuel mixture enriched to be λ < 1. Th control system, while the engine is in the partial engine loading or lean charge combustion zone under a warm engine condition, divides a given amount of fuel into two parts, desirably two substantially equal parts, which are intermittently delivered through early and late split injection respectively in a intake stroke. The fuel injector is energised such that the midpoint between points at which the early and late split injection are timed respectively to start is before the midpoint of a intake stroke, and the exhaust gas recirculation system is caused to admit exhaust gas into an intake air stream introduced into the engine in the partial engine loading zone. When the vehicle proceeds to run under ordinary conditions, the split injection may be made. While the split injection is made, the exhaust gas recirculation system is caused to admit exhaust gas partially into an intake air stream.

In the partial engine loading zone in which the temperature of exhaust gas is generally not risen so high due to an excess of air, the split injection lowers the temperature of exhaust gas even more. Not only during acceleration under which the temperature of exhaust gas tends to rise but during running ordinary conditions under which the temperature of exhaust gas is, if anything, relatively low, the split injection provides a drop in the temperature of exhaust gas as low as possible even during running.

According to a further embodiment of the invention, the engine control system co-operates with a direct injection-spark ignition type of engine which is equipped with an exhaust system having a lean NOx conversion catalyst for lowering an emission level of nitrogen oxides (NOx) in exhaust gas at an air-fuel ratio of *λ* > 1 and controls the engine to operate with a lean fuel charge in a zone of partial engine loading and with a fuel mixture enriched to λ < 1 in a zone other than the lean charge, lower engine loading zone. The control system, when the lean NOₓ conversion catalyst is monitored to be at a temperature higher than a specified level, divides a given amount of fuel into two parts, desirably two substantially equal parts, which are intermittently delivered through early and late split injection respectively in a intake stroke. The fuel injector is energised such that the midpoint between points at which the early and late split injection are timed respectively to start is before the midpoint of a intake stroke.

While the lean NOx conversion catalyst is at a temperature higher than the specified level, the split injection is made to lower the temperature of exhaust gas, preventing the lean NOx conversion catalyst from being overheated.

In the above embodiments, the late split injection is desirably timed to start at a point in one of first and middle divisions of three substantially equal divisions of a intake stroke. Further, the late split injection is desirably timed and to end at a point at in either one of the first and middle divisions while the engine is monitored to operate in a lower engine speed zone. In these instances, the effect of lowering the temperature of exhaust gas is more enhanced. Further, the late split injection may be timed to a point before the midpoint of a intake stroke at which the cylinder piston attains a maximum down speed. In this instance, the piston moving down at its maximum speed creates a strong intake air stream due to which fuel sprayed through the late split injection is diffused and homogeneously distributed in the entire combustion chamber.

The engine control system which, while the engine is in the partial engine loading, divides a given amount of fuel into two parts which are intermittently delivered through early and late split injection respectively in a intake stroke, energises the fuel injector such that the midpoint between points at which the early and late split injection are timed respectively to start is before the midpoint of a intake stroke can be of course employed for a direct injection-spark ignition type of engine which is equipped with an exhaust system having a catalyst for purifying exhaust gas with an effect of preventing a rise in the temperature of exhaust gas in excess, and hence the temperature of the catalyst. In consequence, the catalyst is prevented from encounters aggravation of catalytic conversion efficiency, durability and reliability of the catalyst.

The invention will now be described further, by way of example, with reference to the accompanying drawings, in which:
Figure 1 is a schematic illustration of an engine control system in accordance with an embodiment of the invention;
Figure 2 is a diagram illustrating a map of fuel injection control zones for warm engine operation;
Figure 3 is a diagram illustrating a map of fuel injection control zones for warm engine operation;
Figure 4 is a diagram illustrating a map of exhaust gas recirculation control zone;
Figures 5(A) through 5(D) are a flow chart illustrating a sequence routine of fuel injection control for a microcomputer of an engine control unit;
Figure 6 is a time chart of fuel injection for various engine operating zones;
Figures 7(A) and 7(B) are graphs illustrating specific fuel consumption and Pi coefficient variation with respect to later fuel injection timing;
Figure 8 is another time chart of fuel injection for various engine operating zones;
Figures 9(A) and 9(B) are graphs showing the amount of NOx formation and specific fuel consumption with respect to air-fuel ratio;
Figures 10(A) and 10(B) are graphs showing the temperature of exhaust gas and specific fuel consumption with respect to exhaust gas recirculation rate;
Figure 11 is a time chart of changes in air-fuel ratio, the temperature of exhaust gas and the amount of NOx formation with respect to a change in vehicle speed;
Figure 12 is a diagram illustrating a variation of the map of fuel injection control zones for warm engine operation shown in Figure 2;
Figure 13 is a diagram illustrating another variation of the map of fuel injection control zones for warm engine operation shown in Figure 2; and
Figure 14 is a graph of a drop ratio of the amount of NOx formation relative to the temperature of exhaust gas.

The term "NOx conversion" as used throughout the specification shall mean and refer to a reduction in the NOx content of exhaust gas due such as to NOx adsorption on a NOx adsorption type of catalyst and reduction of NOx to N2 and O2 by a NOx reduction type of catalyst, and the term "lean NOx conversion catalyst" as used throughout the specification shall mean and refer to the type controlling or lowering an emission level of nitrogen oxides (NOx) in a lean exhaust gas whose air-fuel ratio is λ > 1.

Because a direct injection-spark ignition type of gasoline engine is well known, the present description will be directed in particular to elements forming part of, or cooperating directly with, an engine control system in accordance with the present invention. It is to be understood that elements not specifically shown or described can take various forms well known to those skilled in the automobile art.

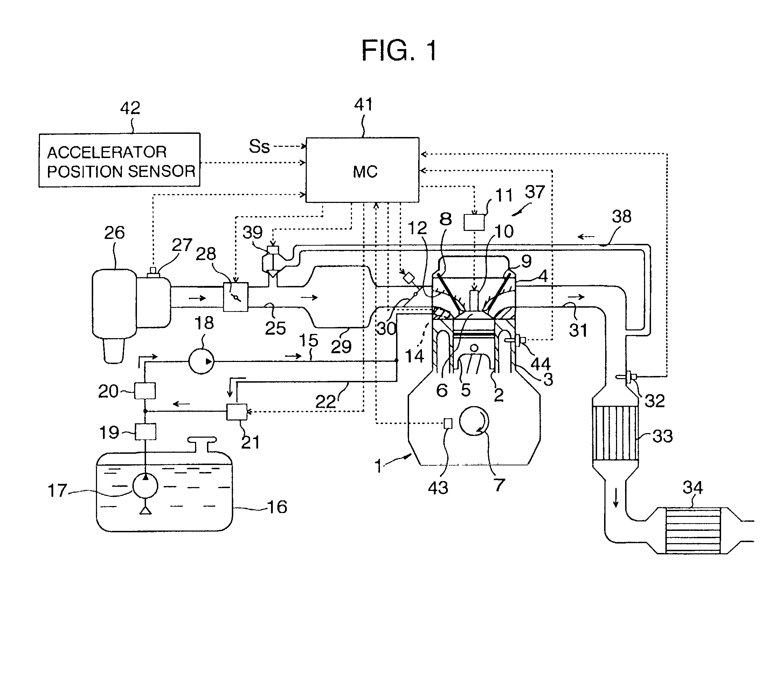

Referring to the drawings in detail and, in particular, to Figure 1 showing an engine control system in accordance with an embodiment of the invention, a fuel direct injection type of multiple cylinder engine 1 equipped with exhaust gas recirculation system, which is controlled by the engine control system, is comprised of a cylinder block 3 provided with cylinder bores 2 (only one of which is shown) in which pistons 5 can slide and a cylinder head 4 mounted on the cylinder block 3. A combustion chamber 6 is formed in the cylinder by the top of the piston 5, a lower wall of the cylinder head 4 and the cylinder bore 2. Two intake ports 12 (only one of which is shown) and one exhaust port 13 are opened into the combustion chamber 6, and are opened and shut at a predetermined timing by intake valves 8 and an exhaust valve 9, respectively. A fuel injector 14 is installed into the cylinder head 4 such that a spray of fuel is directly charged into the combustion chamber 6 from the side. The piston 5 at its top cavity (not shown) traps the spray of fuel to form a stratum of relatively dense air-fuel mixture near the spark plug 10, so as thereby to form a stratified charge of air-fuel mixture in the combustion chamber 6. This engine 1 is of a direct injection-spark ignition type. A spark plug 10 is installed in the cylinder head 4 such that electrodes of the spark plug 10 are placed down into the combustion chamber 6 and aligned with the vertical centre line of the cylinder and connected to an ignition circuit 11 to ignite an air-fuel mixture in the combustion engine. A fuel line 15, through which the fuel is delivered to the fuel injector 14 from a fuel tank 16 is equipped with two fuel pumps, namely a low pressure fuel pump 17 disposed in the fuel tank 16 and a high pressure fuel pump 18 disposed the outside of the fuel tank 16. The fuel line 15 between the fuel pumps 17 and 18 is further equipped with a low pressure regulator 19 and a fuel filter 20 positioned in this order from the side of fuel tank 16. A fuel return line 22 equipped with a high pressure regulator 21 is connected to the fuel line 15 between a point after the high pressure fuel pump 18 and a point before the fuel filter 2C. Fuel is drawn up from the fuel tank 16 by the low pressure pump 17, regulated in pressure by the low pressure regulator 19, and then multiplied in pressurised by the high pressure fuel. pump 18 to the fuel injector 14. The high pressurised fuel is partly delivered to the fuel injector 14 and partly returned through the return fuel line 22. The high pressure regulator 21 regulates a return fuel quantity so as to optimise the pressurised fuel in pressure level directed to the fuel injector 14.

An intake line 25 has an air cleaner 26 at the upstream end and an intake manifold at the downstream end which is independently connected to the intake ports 12 of the cylinder. An intake valve 8 is provided in each intake port 12 and an air stream control valve 30 is provided either one of the intake ports 12 only. The air stream control valve 30, which may be of an actuator operated type, causes an air stream to be admitted into the combustion chamber 6 through only the other intake port 12 while it closes, which results in forming, for example, a swirl of intake air abundant in tumble components in a direction of the vertical axis of the cylinder. The intake line 25 is provided with a heat sensing type of air-flow sensor 27, an electrically controlled throttle valve 28 and a surge tank 29 in order from the upstream end. The throttle valve 28 is not controlled directly by an accelerator pedal but indirectly by an accelerator pedal through an actuator (not shown).

An exhaust line 31 through which exhaust gas are discharged into the atmosphere is provided with an oxygen sensor (which is hereafter referred to as an O2 sensor) 32, a three-way catalyst 33 and a NOx adsorption type of lean NOx conversion catalyst 34 (which may otherwise be of a NOx reduction type) in order from the upstream end. The O2 sensor 32 monitors the oxygen concentration of exhaust gas based on which an air-fuel ratio is determined and provides an output sharply changing on opposite sides of a stoichiometric exhaust air-fuel ratio. Each of the catalysts 33 and 34 is of a type using a cordierite honeycomb block coated with a catalytic material which allows exhaust gas to flow through. The three-way catalyst 33 significantly lowers emission levels of hydrocarbons (HC) and carbon monoxide (CO). The lean NOx conversion catalyst 34 adsorbs NOx in exhaust gas even when the air-fuel ratio is λ > 1 as well as lowering emission levels of HC and CO. These three-way catalyst 33 and lean NOx conversion catalyst 34 may be replaced in position with each other. Further, when the lean NOx conversion catalyst 34 is of a double layer type that has a NOx adsorption catalytic layer and a NOx reduction catalytic layer, it is not always necessary to use the three-way catalytic converter.

An exhaust gas recirculation (EGR) system 37 is provided to admit exhaust gas partly into the intake line 25. The exhaust gas recirculation (EGR) system 37 has a recirculation line extending from the exhaust line 31 upstream the O2 sensor 32 to the intake line 25 between the throttle valve 28 and the surge tank 29, and an electrically operated exhaust gas recirculation (EGR) valve 39 installed to the recirculation line 38 in a position close to the intake line 25. The amount of exhaust gas that is recirculated through the recirculation line 38 can be controlled by the EGR valve 39. This EGR valve 39 is designed to admit carefully controlled amounts of exhaust gas into the intake air stream.

Operation of the ignition circuit 11, the fuel injector 14, the high pressure regulator 21, the actuator of the throttle valve 28, the air stream control valve 30, the EGR valve and other electrically operated elements are controlled by a control unit 41 comprising a microcomputer MC. Various signals are transferred to the control unit 41 from at least the air-flow sensor 27, the O2 sensor 32, an accelerator position sensor 42 which detects accelerator positions as engine loading, a crank angle sensor 43 which monitors angles of rotation of a crankshaft 7 of the engine as an engine speed of rotation, a temperature sensor 44 which monitors the temperature of engine cooling water to determine whether the engine 1 is in a cold condition, under a warming up, or in a warm condition, a position sensor (not shown) incorporated in the EGR valve 39 which monitors a valve lift of the EGR valve 39, and an engine starter (not shown). The fuel injector 14 is pulsed to open by energising a solenoid according to a pulse width. The control unit 41 constantly monitors engine speed, load, throttle position, exhaust, temperature, etc to control the pulse width according to a fuel injection control map.

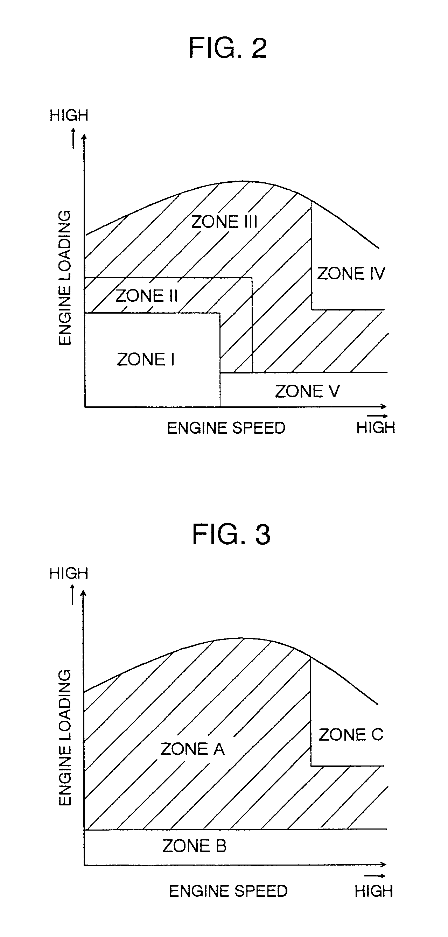

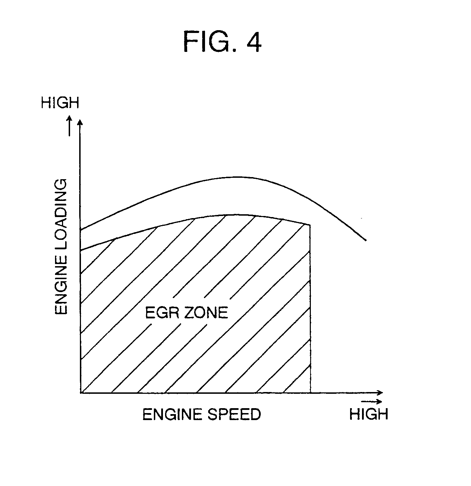

Figures 2 and 3 show fuel charge control maps with engine speed and loading as parameters for warm engine operations and cold engine operations, respectively, which define a lean fuel charge zone in which the engine is charged with an air-fuel mixture of λ > 1 and an enriched fuel charge zone in which the engine is charged with an air-fuel mixture of λ < 1 and, in another aspect, a non-split injection zone in which a given amount of fuel is delivered all at once and a split injection zone in which a given amount of fuel is delivered through in two steps or through two split injection. Specifically, the fuel charge control map shown in Figure 2 used while the engine is in a warm condition defines five fuel charge control zones, namely a lean stratified charge zone (I), a lean homogeneous charge zone (II), and an enriched homogeneous charge zones (III) (V). In the lean stratified charge zone (I) which is defined for lower engine loading and lower to middle engine speeds, a given amount of fuel is sprayed all at once to cause lean stratified charge combustion immediately before an ignition timing at which the spark plug 10 is fired in a compression stroke. In the lean homogeneous charge zone (II) which is defined for lower to middle engine loading and lower to middle engine speeds, a given amount of fuel is divided into two parts and sprayed in two steps in a intake stroke to cause lean homogeneous charge combustion. In the enriched homogeneous charge zone (III) which is defined for higher engine loading and higher engine speeds, a given amount of fuel is divided into two parts and sprayed in two steps in a intake stroke to cause enriched homogeneous charge combustion. In the enriched homogeneous charge zone (IV) which is defined for higher engine loading and higher engine speeds, a given amount of fuel is sprayed all at once in a intake stroke to cause enriched homogeneous charge combustion. In the enriched homogeneous charge zone (V) which is defined for lower engine loading and middle to higher engine speeds, a given amount of fuel is sprayed all at once in a intake stroke to cause enriched homogeneous charge combustion. All these zones (I) (V) are established so as not to overlap one another. The fuel charge control map shown in Figure 3 used while the engine is in a cold condition defines three enriched homogeneous charge zones (A), (B) and (C). In the enriched homogeneous charge zone (A) which is defined for middle to higher engine loading and lower to higher engine speeds, a given amount of fuel is divided into two parts and sprayed in two steps in a intake stroke to cause enriched homogeneous charge combustion. In both enriched homogeneous charge zone (B) which is defined for lower engine loading and lower to higher engine speeds and enriched homogeneous charge zone C) which is defined for higher engine loading and higher engine speeds, a given amount of fuel is sprayed all at once in a intake stroke to cause enriched homogeneous charge combustion. These three zones (A) (C) are established so as not to overlap one another. While the engine operates in any one of the engine control zones (II), (III) and (A) shaded in Figures 2 and 3 in which split injection is made in a intake stroke, the EGR system 37 is actuated to admit amounts of exhaust gas controlled by the EGR valve 39 into the intake air stream. The exhaust gas recirculation (EGR) rate, which refers to a rate of the amount of exhaust gas that is recirculated relative to the amount of exhaust gas that is produced resulting from combustion varies according to engine operating zones up to 10 to 40 %.As shown in Figure 4, the EGR zone covers the lean stratified charge zone (I), the lean homogeneous charge zone (II) and the enriched homogeneous charge zone (III) excepting a higher engine loading region for warm conditions, and the enriched homogeneous charge zone (A) excepting a higher engine loading region for cold conditions.

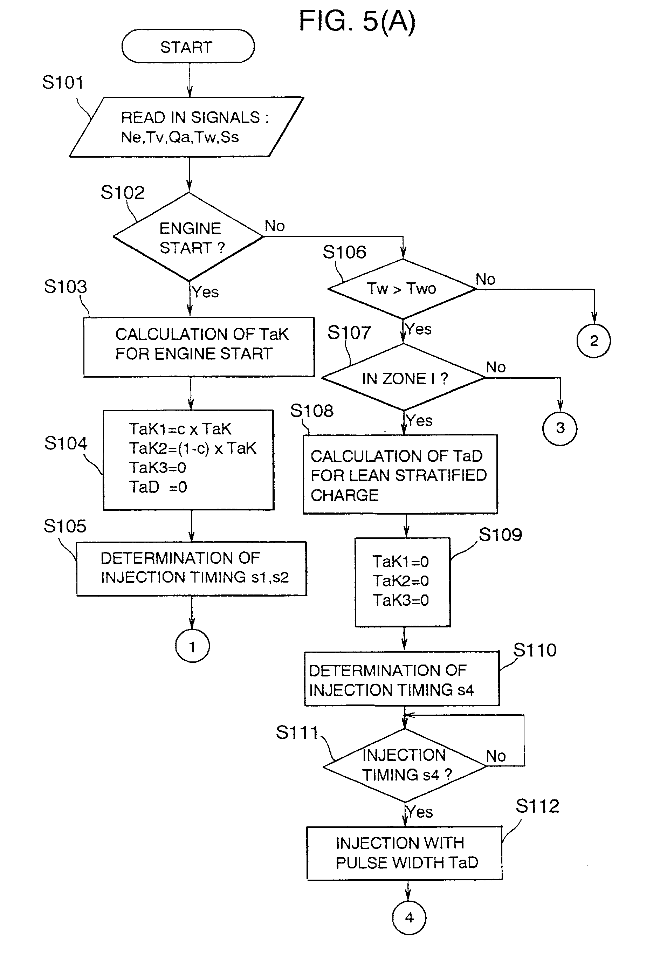

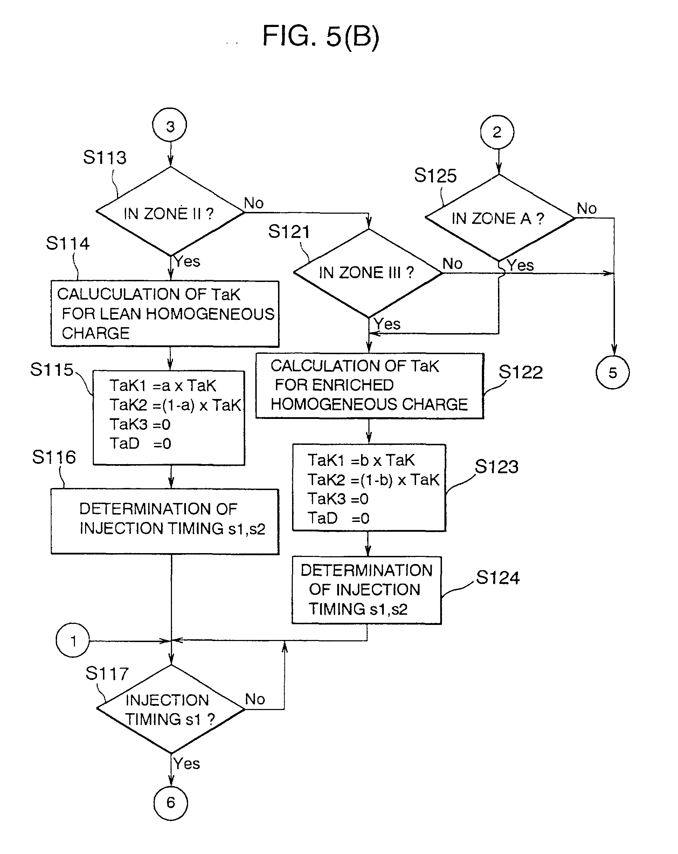

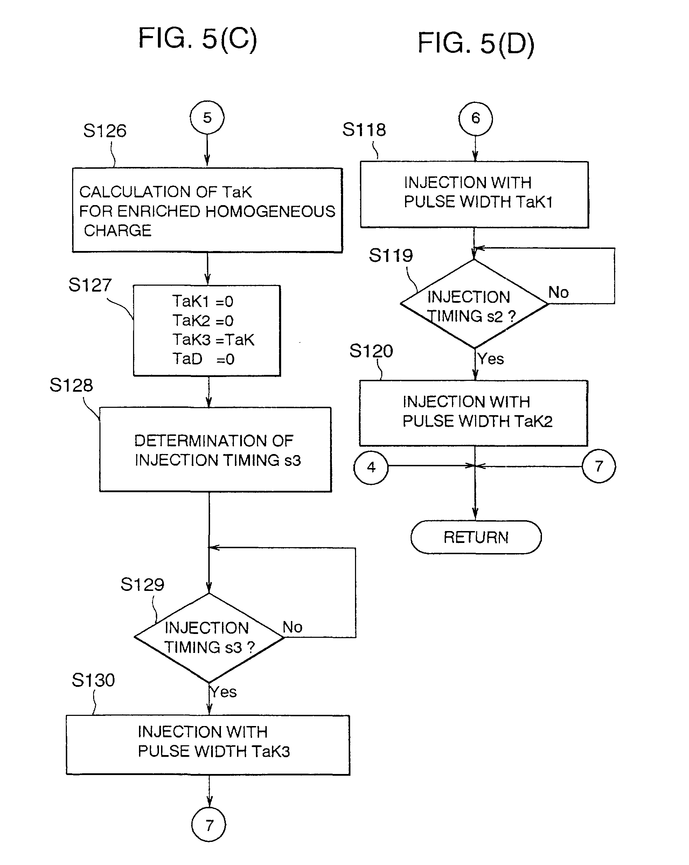

Figures 5(A) through 5(D) show a flow chart illustrating a sequence routine of fuel charge control.

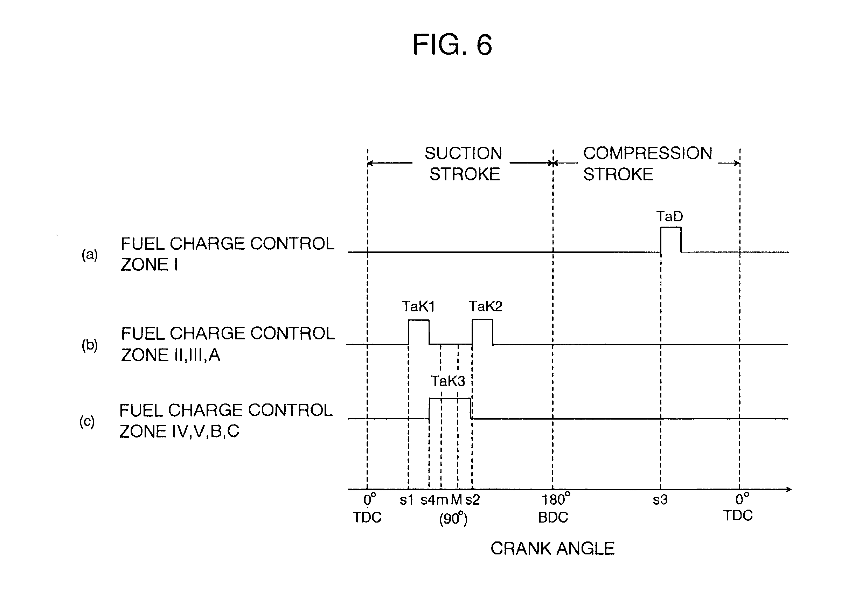

As shown, when the flow chart logic commences and control proceeds directly to a function block at step S101 where signals Ne, Tv, Qa, Tw and Ss representative of various control factors such as engine speed, accelerator position, intake air quantity, cooling water temperature and a starter signal, respectively, are read into the control unit 41. Subsequently, a decision is made at step S102 as to whether the engine 1 starts. When there is an occurrence of a starter signal Ss and the engine speed Ne is lower than a specified speed, an engine start is ascertained. When the answer is affirmative, an injection pulse width TaK at the engine start is calculated at step S103. The given amount of fuel is divided into two parts for early fuel injection and later fuel injection made in an intake stroke according to a split ratio represented by a split factor c (1 > 0). For this purpose, the injection pulse width TaK is divided into two split injection pulse widths TaK1 which is expressed by c x TaK and TaK2 which is expressed by (1 - c) x TaK at step S104. At the beginning of engine operation, a given amount of fuel is neither sprayed in non-split intake stroke injection nor in non-split compression stroke injection, and simultaneously both non-split intake stroke injection pulse width TaK3 and non-spilt compression stroke injection pulse width TaD are set to 0 (zero). Thereafter, split injection timings s1 and s2 for the early and later fuel injection are determined, respectively, at step S105. As shown by (b) in Figure 6, the early and late split injection timings s1 and s2 are predetermined. That is, the early split injection timing s1 for the early fuel injection is dictated by an angle of rotation of the crankshaft 7 in an early half of a intake stroke and, more specifically, at a crank angle 45 to 50 degrees before top-dead-centre in a intake stroke, and the late split injection is timed to start at a point or timing s2 in a later half of the intake stroke and, more specifically, at a crank angle 100 to 120 degrees after top-dead-centre in the intake stroke. After the determination of early and late split injection timings s1 and s2 at step S105, a decision is made at step S117 as to whether it is the early split injection timing s1 for the early fuel injection. After waiting up to the early split injection timing s1 at step S117, the fuel injector 14 is pulsed to open to deliver the amount of fuel depending upon the early split injection pulse width TaK1 at step S118. Similarly, a decision is subsequently made at step S119 as to whether it is the late split injection timing s2 for the later fuel injection. After waiting up to the late split injection timing s2 at step S119, the fuel injector 14 is pulsed to open to deliver the amount of fuel depending upon the late split injection pulse width TaK2 at step S120. After a conclusion of the late split injection at step S120, the flow chart logic returns to restart the sequence routine.

On the other hand, when the answer to the decision as to engine start made at step S102 is negative, another decision is made at step S106 as to whether the cooling water temperature Tw is higher than a specified value Two, i.e. whether the engine 1 is in a warm condition. When the answer is affirmative, then, still another decision is made at step S107 as to whether the engine operating condition is in the lean stratified charge zone (I) for lower engine loading and middle to higher engine speeds of the fuel charge control map for warm engine operation shown in Figure 2. When the engine operating condition, or the engine loading and speed, is in the lean stratified charge zone (I), a non-split compression stroke injection pulse width TaD for the lean stratified charge combustion is calculated at step S108. In the lean stratified charge zone (I), neither split injection nor non-split intake stroke fuel injection is made, both split injection pulse widths Tak1 and Tak2 and non-split intake stroke injection pulse width TaK3 are set to 0 (zero) at step S109. Thereafter, a non-split compression stroke injection timing s3 is determined at step S110. As shown by (a) in Figure 6, the non-split compression stroke injection timing s3 is predetermined. That is, the non-split compression stroke injection timing s3 is set in a later half of a compression stroke. Subsequently, a decision is made at step S111 as to whether it is the injection timing s3 for the non-split compression stroke injection. After waiting up to the non-split compression stroke injection timing s3 at step S111, the fuel injector 14 is pulsed to open to deliver the amount of fuel depending upon the non-split compression stroke injection width TaD at step S112. After a conclusion of the non-split compression stroke injection, the flow chart logic returns to restart the sequence routine.

When the answer to the decision as to engine operating condition made at step S107 is negative, another decision is subsequently made at step S113 as to whether the engine operating condition is in the lean homogeneous charge zone (II) for lower engine loading and lower to middle engine speeds of the fuel charge control map for warm engine operation shown in Figure 2. When the engine operating condition, or the engine loading and speed, is in the lean homogeneous charge zone (II), an injection pulse width TaK for lean homogeneous charge combustion is calculated at step S114. The given amount of fuel is divided into two parts for early fuel injection and later fuel injection made in a intake stroke according to a split ratio represented by a split factor a (1 > 0) at step S115. The injection pulse width TaK is divided into an early split injection pulse width TaK1 which is expressed by a x TaK and a late split injection pulse width TaK2 which is expressed by (1 - a) x TaK. In the lean homogeneous charge zone (II) the given amount of fuel is neither sprayed in non-split intake stroke injection nor in non-split compression stroke injection and consequently both non-split intake stroke injection pulse width TaK3 and non-spilt compression stroke injection pulse width TaD are set to 0 (zero). Thereafter, early and late split injection timings s1 and s2 are determined as shown by (b) in Figure 6 at step S116, After waiting up to the early split injection timing s1 at step S117, the fuel injector 14 is pulsed to open to deliver the amount of fuel depending upon the early split injection pulse width TaK1 at step S118. Similarly, after waiting up to the late split injection timing s2 at step S119, the fuel injector 14 is pulsed to open to deliver the amount of fuel depending upon the late split injection pulse width TaK2 at step S120. After a conclusion of the late split injection at step S120, the flow chart logic returns to restart the sequence routine.

When the engine operating condition is out of the lean homogeneous charge zone (II), another decision is subsequently made at step S121 as to whether the engine operating condition is in the enriched homogeneous charge zone (III) for middle to higher engine loading and lower to higher engine speeds of the fuel charge control map for warm engine operation shown in Figure 2. When the engine operating condition, or the engine loading and speed, is in the enriched homogeneous charge zone (III), an injection pulse width TaK for enriched homogeneous charge combustion is calculated at step S122. The given amount of fuel is divided into two early fuel injection and later fuel injection made in a intake stroke according to a split ratio represented by a split factor b (1 > 0) at step S123. The injection pulse width TaK is divided into an early split injection pulse width TaK1 which is expressed by b x TaK and a late split injection pulse width TaK2 which is expressed by (1 - b) x TaK. In the enriched homogeneous charge zone (III) the given amount of fuel is sprayed neither in non-split intake stroke injection nor in non-split compression stroke injection and consequently both non-split intake stroke injection pulse width TaK3 and non-spilt compression stroke injection pulse width TaD are set to 0 (zero). In the same manner as in the lean homogeneous charge zone (II), early and late split injection timings s1 and s2 are determined as shown by (b) in Figure 6 at step S124. After waiting up to the early split injection timing s1 at step S117, the fuel injector 14 is pulsed to open to deliver the amount of fuel depending upon the early split injection pulse width TaK1 at step S118. Similarly, after waiting up to the late split injection timing s2 at step S119, the fuel injector 14 is pulsed to open to deliver the amount of fuel depending upon the late split injection pulse width TaK2 at step S120. After a conclusion of the late split injection at step S120, the flow chart logic returns to restart the sequence routine.

When the answer to the decision as to the enriched homogeneous charge combustion is negative, this indicates that the engine operating condition is in either the enriched homogeneous charge zone (IV) for higher engine loading and higher engine speeds or the enriched homogeneous charge zone (V) for lower engine loading and middle to higher engine speeds, then, an injection pulse width TaK for enriched homogeneous charge combustion is calculated at step S126. In the zone (IV) or (V), the given amount of fuel is sprayed all at once in a intake stroke, the injection pulse width TaK is employed as a non-split intake stroke injection pulse width TaK3 at step S127. Simultaneously, both split injection pulse widths Tak1 and Tak2 and non-split compression stroke injection pulse width TaD are set to 0 (zero). Thereafter, a non-split intake stroke injection timing s4 is determined at step S128. As shown by (c) in Figure 6, the non-split intake stroke injection timing s4 is predetermined. That is, the non-split intake stroke injection timing s4 is set such that the non-split intake stroke injection is started at approximately the midpoint of a intake stroke. Subsequently, after waiting up to the non-split intake stroke injection timing s4 at step S129, the fuel injector 14 is pulsed to open to deliver the amount of fuel depending upon the non-split intake stroke injection width TaK3 at step S130. After a conclusion of the non-split intake stroke injection, the flow chart logic returns to restart the sequence routine.

Further, when the answer to the decision as to cooling water temperature Tw made at step S106 is negative, this indicates that the engine 1 is still in a cold condition, then, another decision is subsequently made at step S125 as to whether the engine operating condition is in the enriched homogeneous charge zone (A) for middle to middle to higher engine loading of the fuel charge control map for cold engine operation shown in Figure 3. When the engine operating condition, or the engine loading and speed, is in the enriched homogeneous charge zone (A), steps S122-S124 and S117 through S120 are taken to cause early and late split injection in a intake stroke to deliver the given amounts of fuel depending upon the early and late split injection pulse widths TaK1 and TaK2.

On the other hand, when the answer to the decision as to engine operating condition made at step S125 is negative, this indicates that the engine operating condition is either the enriched homogeneous charge zone (B) for lower engine loading or the enriched homogeneous charge zone (C) for higher engine loading and higher engine speeds, then, a given amount of fuel is sprayed in non-split intake stroke injection. An injection pulse width TaK for enriched homogeneous charge combustion is calculated at step S126 and is employed as a non-split intake stroke injection pulse width TaK3 at step S127. Simultaneously, both split injection pulse widths Tak1 and Tak2 and non-split compression stroke injection pulse width TaD are set to 0 (zero). After waiting up to the non-split intake stroke injection timing s4 at step S129, the fuel injector 14 is pulsed to open to deliver the amount of fuel depending upon the non-split intake stroke injection width TaK3 at step S130. After a conclusion of the non-split intake stroke injection, the flow chart logic returns to restart the sequence routine.

In the engine operation control system according to the above embodiment, the midpoint m between the early and late split injection timings s1 and s2 is put before the midpoint M of a intake stroke which is at a crank angle 90 degrees after top-dead-centre. Each injection pulse split factor a, b, c is set approximately 0.5, which divides a given amount of fuel into two exact halves for early and later fuel injection.

In operation of the engine control system according to the above embodiment of the invention, immediately after an engine start, a given amount of fuel is divided into two parts and sprayed through early and late split injection in a intake stroke as shown by (b) in Figure 6. During idling after the engine start, while the engine 1 is monitored to be still in a cold condition in which the cooling water temperature Tw is lower than the specified value Two and in the enriched homogeneous charge zone (B) for lower engine loading or the enriched homogeneous charge zone (C) for higher engine loading and higher engine speeds, a given amount of fuel is sprayed all at once in a intake stroke as shown by (c) in Figure 6. Further, during in cold engine operation, when the engine 1 operates in the enriched homogeneous charge zone (A) for middle to higher engine loading, a given amount of fuel is divided into two parts and sprayed through early and late split injection in a intake stroke as shown (b) in Figure 6.

After the cooling water temperature Tw reaches the specified value Two, or during in warm engine operation, a given amount of fuel is divided into two parts and sprayed through early and late split injection in a intake stroke as shown (b) in Figure 6 when the engine 1 operates in the lean homogeneous charge zone (II) for lower to middle engine loading and lower to middle engine speeds or in the enriched homogeneous charge zone (III) for middle to higher engine loading. On the other hand, a given amount of fuel is sprayed all at once in a compression stroke as shown by (a) in Figure 6 when the engine 1 operates in the lean stratified charge zone (I) for lower engine loading and lower to middle engine speeds or in a intake stroke as shown by (c) in Figure 6 when the engine 1 operates in the enriched homogeneous charge zone (IV) for higher engine loading and higher engine speeds or in the enriched homogeneous charge zone (V) for lower engine loading and middle to higher engine speeds. Further, while the engine operates in the zone in which a given amount of fuel is sprayed through early and late split injection in a intake stroke, i.e. in any one of the enriched homogeneous charge zone (A), the lean homogeneous charge zone (II) and the enriched homogeneous charge zone (III), the EGR valve 39 is actuated to admit exhaust gas in the exhaust line 31 partly into an intake air stream in the intake line 25.
Practically, the exhaust gas recirculation (EGR) rate is significantly low while the engine operates with higher loading in the enriched homogeneous charge zone (A) and the enriched homogeneous charge zone (III). The EGR valve 39 may be shut in the higher loading zone as shown in Figure 4.

When a given amount of fuel is divided into two parts and sprayed in two steps through early and late split injection in a intake stroke, the part of fuel sprayed through the early split injection is homogeneously diffused in the combustion chamber 6 with an increase in volume of the combustion chamber 6 following a down stroke of the piston 5 with absence of fuel injection before the late split injection. Subsequently, the part of fuel splayed through the late split injection is diffused, so as to provide a homogeneous distribution of air-fuel mixture in the combustion chamber 6. As a result, the combustion velocity is increased in a piston stroke following a compression stroke with an effect of providing a rise in combustion efficiency and a drop in exhaust gas temperature. Further, the early and late split injection which is shifted as one whole a little to the early side of a intake stroke prevents or significantly reduces sticking of sprayed fuel through the late split injection to the side wall of the cylinder bore 2 when the piston 5 reaches near bottom-dead-centre or at the end of a intake stroke, which is always desirable for a homogeneous distribution of fuel in the combustion chamber 6. Furthermore, there is provided a long time before fuel ignition for which fuel is allowed to be sprayed and evaporate. The acceleration of accomplishment of a homogeneous distribution of fuel and evaporation of fuel is significantly enhanced by the mutually potentiating effect, so that a big raise in combustion velocity is further provided with an effect of lowering the temperature of exhaust gas.

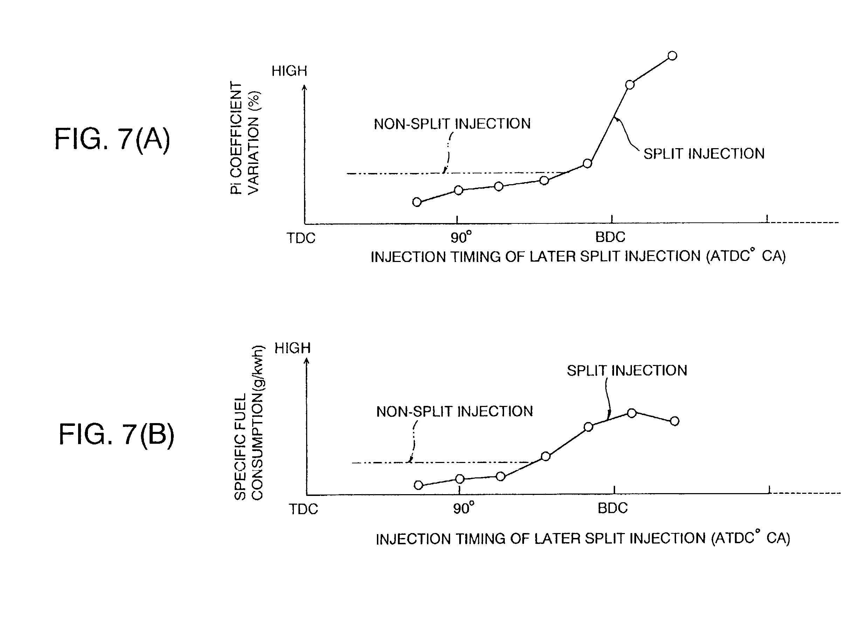

In order to demonstrate empirically the extent of the improvement of combustibility, measurements of combustion stability and changes in specific fuel consumption of an engine were made in such a manner that, while a given amount of fuel was divided into two substantially equal parts for early and late split injection, the early split injection was fixedly timed to start at a point or timing s1 an early stage of a intake stroke and the late split injection was timed to start at a point s2 changing in a period of time lying between a intake stroke and a subsequent compression stroke. The result of measurements is shown in Figures 7(A) and 7(B).

Referring to Figure 7(A) showing the coefficient variation of indicated mean effective pressure (Pi coefficient variation), it is proved that, as the early split injection timing s1 is advanced, the Pi coefficient variation and the specific fuel consumption lower. In more detail, when the early split injection is timed to start at a point s1 before reaching a crank angle of 120? after top-dead centre in an exhaust stroke, i.e. at a point in an early-to-middle division of a intake stroke, both Pi coefficient variation and specific fuel consumption are reduced more as compared to the case where a given amount of fuel is sprayed through non-split injection. The Pi coefficient variation and the specific fuel consumption are reduced greatly as the late split injection timing s2 is advanced. Accordingly, in a zone where the given amount of fuel, and hence a injection pulse width, is small such as a zone for low loading and low speed engine operating zones, the combustibility is even more improved greatly when the late split injection is advanced so as to end before an crank angle of 120? after top-dead centre.

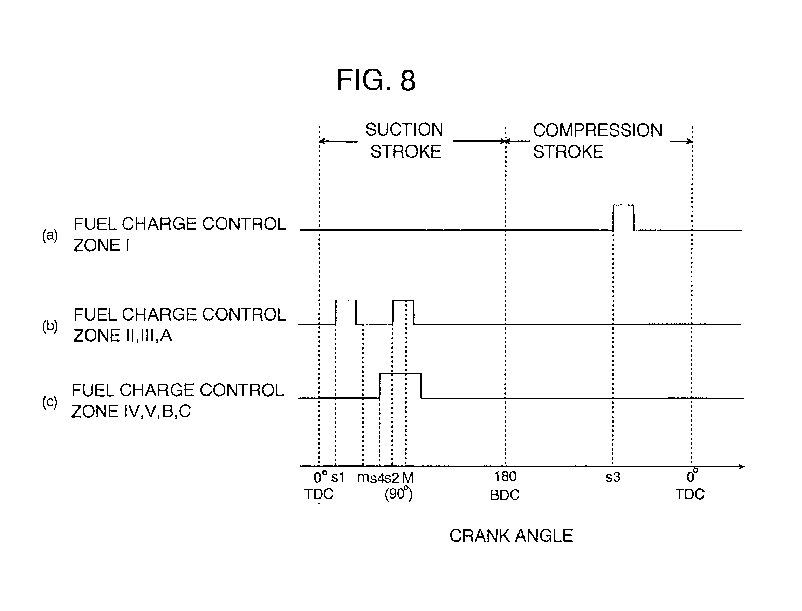

As shown by (b) in Figures 8, when the midpoint of a late split injection period is put at a point, for example at a crank angle of 86? after top-dead centre, where the piston 5 attains the highest lowering speed before the midpoint M of a intake stroke, the late split injection is made in a condition where the piston 5 moves down with the highest speed with an effect of causing an intake air stream to enter with the highest speed, a spray of fuel through the late split injection is homogeneously distributed in the combustion chamber 6 by the intake air stream, which provides more enhanced improvement of the combustibility. In this instance, the timing of early split injection s1 is fixed at a crank angle of 20? after top-dead centre, and the late split injection timing s2 is fixed at a crank angle of 70? after top-dead centre.

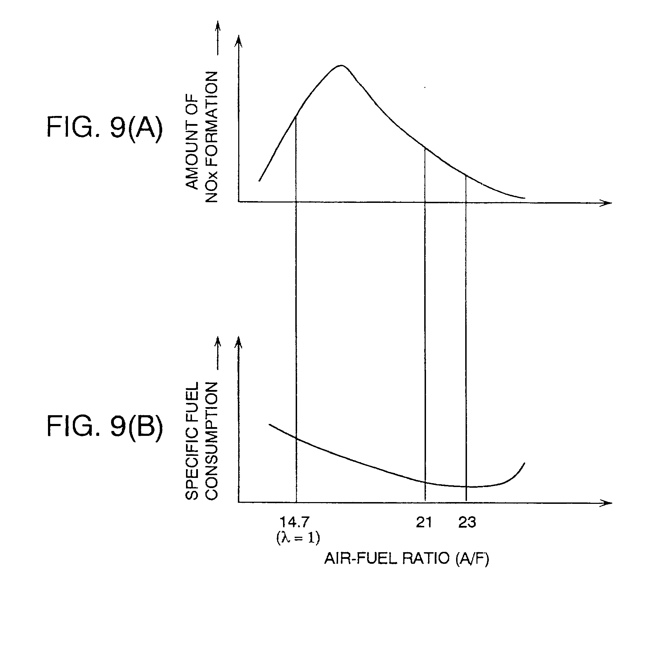

According to the engine control system described above, a given amount of fuel at an engine start is sprayed through the split injection, the fuel is evaporated without overly enriching the air-fuel mixture during starting, enabling the engine 1 to show both lean charge combustion performance and improved startability. Since, while the engine 1 operates in a cold condition under which fuel becomes somewhat inferior in evaporation and combustibility, the split injection is performed in the enriched homogeneous charge zone (A), evaporation of an enriched fuel mixture is accelerated and its combustibility is improved. Further, since the split injection is performed in the lean homogeneous charge zone (II) in a warm condition, a lean limit of an the air-fuel ratio is risen due to the improvement of homogeneous fuel distribution. As a result, as shown in Figures 9(A) and 9(B), the specific fuel consumption is improved and the amount of NOx formation is greatly reduced.

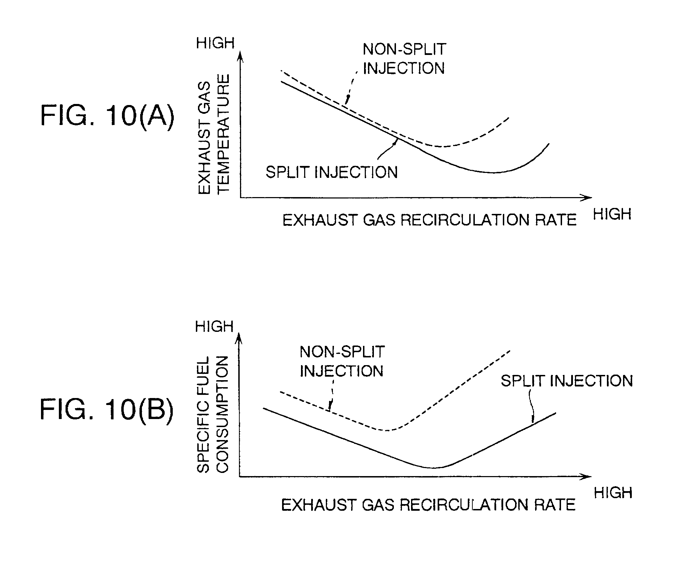

Furthermore, while an air stream is admitted into the combustion chamber 6 through only one intake port 12 other than the intake port 12 with the air stream control valve 30 installed therein while the air stream control valve 30 is closed, a swirl of intake air is created in the combustion chamber 6, accelerating a homogeneous distribution of fuel with an effect of improving combustibility of the fuel. The EGR system 37 is actuated to admit exhaust gas in the exhaust line 31 partly into an intake air stream in the intake line 25 in the enriched homogeneous charge zone (A), the lean homogeneous charge zone (II) and the enriched homogeneous charge zone (III), in each zone a given amount of fuel being sprayed through the early and late split injection in a intake stroke. Due to the combustibility of fuel mixture resulting from the split injection in a intake stroke, the exhaust gas can be recirculated into an intake air stream with an exhaust gas recirculation (EGR) rate up to 10 - 40 % and the limit rate of exhaust gas recirculation is consequently risen. As shown in Figures 10(A) and 10(B), as compared to the case where a given amount of fuel is sprayed all at once through the non-split injection in a intake stroke, the specific fuel consumption is lowered resulting from a drop in pumping loss and the temperature of exhaust gas is lowered.

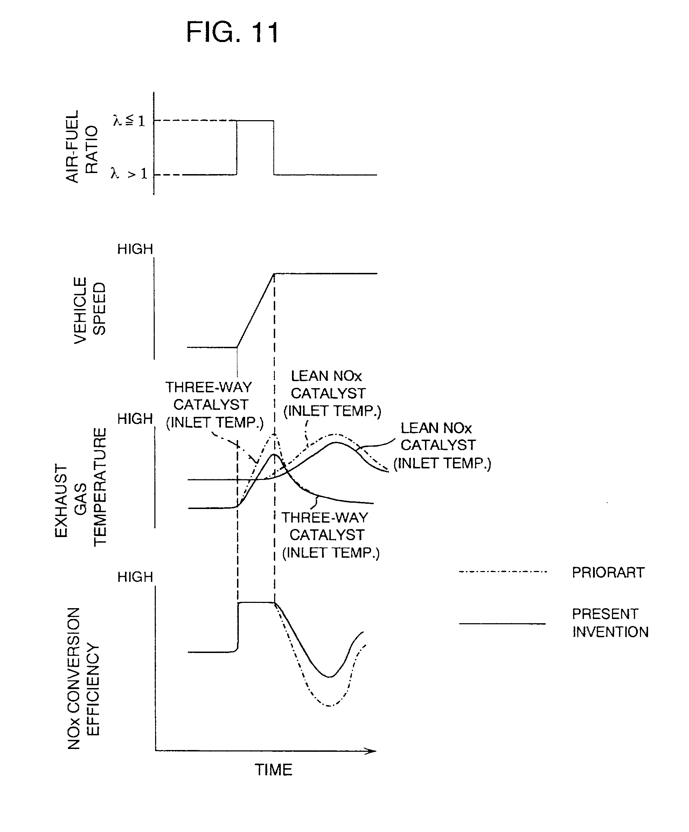

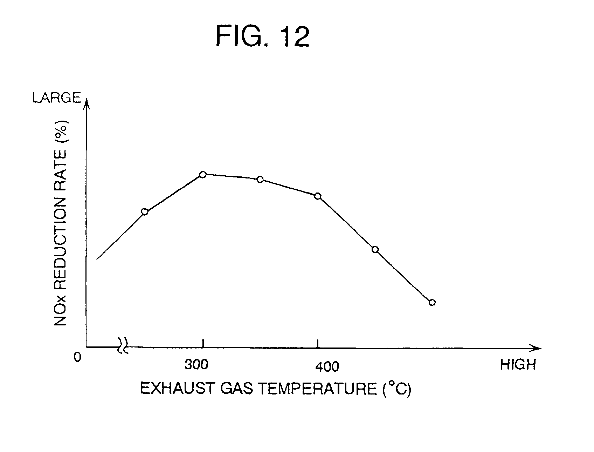

While the engine operates in the lean stratified charge zone (I), a given amount of fuel is sprayed all at once through the non-split injection in a compression stroke to create a dense stratum of a fuel mixture around the spark plug 10 to stratify the fuel mixture in the combustion chamber 6. As was previously described, because the fuel injector 14 is positioned off the vertical axis of the cylinder bore 2 to spray fuel from the side of combustion chamber 6, easily creating a stratified distribution of fuel mixture with an effect of improving the combustibility of fuel mixture. As a result, the temperature of exhaust gas is lowered sufficiently to improve the NOx conversion performance of lean NOx conversion catalyst 34. Specifically, as shown in Figure 11 showing changes in exhaust gas temperature and NOx conversion performance with respect to a change in vehicle speed, while the vehicle runs with at a constant speed under an ordinary condition, when the engine operating condition falls in the enriched stratified charge zone (I) for lower engine loading and lower to middle engine speeds in which fuel is sprayed through the non-split injection, the inlet temperature of exhaust gas to the three-way catalyst 33 is lower than that to the lean NOx conversion catalyst 34 disposed downstream from the three-way catalyst 33. , when the engine operating condition changes from that condition due, for example, to acceleration through stepping on the accelerator pedal and falls in the enriched homogeneous charge zone (II), while the engine operates with a fuel mixture enriched to be λ < 1, the vehicle speeds up. As a result, the inlet temperature of exhaust gas to the three-way catalyst 33 sharply rises and becomes higher than that to the lean NOx conversion catalyst 34. A rise in the inlet temperature of exhaust gas to the lean NOx conversion catalyst 34 is gradual due to a separation from the three-way catalyst 33. Even if NOx are increased in the exhaust gas resulting from the acceleration, they are catalysed through the three-way catalyst 33, so that these catalysts 33 and 34 perform with a high NOx conversion performance as one whole. When the engine 1 is put under ordinary condition due to releasing the accelerator pedal and, as a result, the engine operating condition falls in the lean stratified charge zone (I) for lower engine loading and lower to middle engine speeds in which fuel is sprayed through the non-split injection, the speed of vehicle becomes constant. According to the prior art engine control system, because the inlet temperature of exhaust gas to the lean NOx conversion catalyst 34 has risen in this state, the NOx conversion performance of lean NOx conversion catalyst 34 is significantly lowered following a change in air-fuel ratio to the lean side as shown by a dotted broken line in Figure 11. However, according to the engine control system of the invention, the split injection is performed in a intake stroke in the enriched homogeneous charge zone (III), the temperature of exhaust gas is entirely lowered as shown by a solid line in Figure 11. A decline in NOx conversion performance due to a rise in the temperature of lean NOx conversion catalyst 34 is restrained as shown in Figure 12.

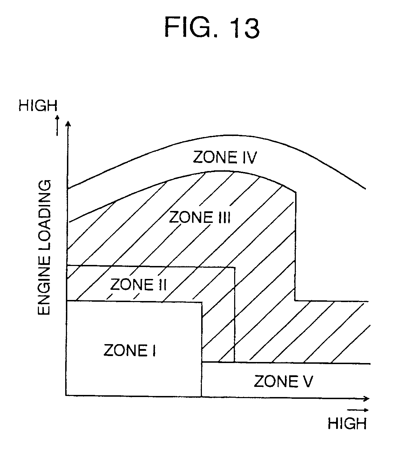

Figure 13 show a fuel charge control map for cold engine operation which is similar to that shown in Figure 2 but has an enriched homogeneous charge zone (IV) is expanded above an enriched homogeneous charge zone (III). When using the fuel charge control map in the fuel charge control shown in Figures 5(A) through 5(D), the exhaust gas recirculation control is executed while the engine operates in the EGR zone shown in Figure 4 which covers the lean stratified charge zone (I), the lean homogeneous charge zone (II) and the enriched homogeneous charge zone (III).

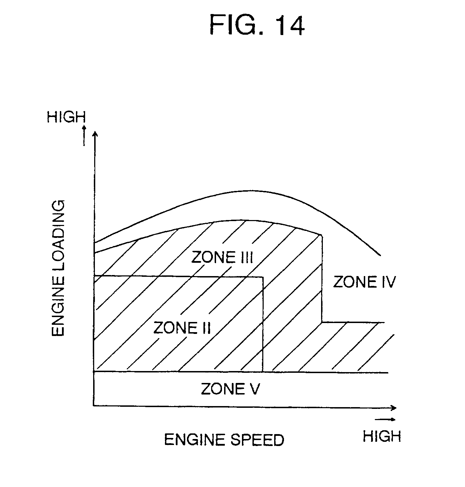

Figure 14 show a fuel charge control map for cold engine operation which is suitably used for fuel charge control of a direct injection-spark ignition engine of a type which does not have a stratified charge combustion feature. As shown in Figure 14, the fuel charge control map is similar to that shown in Figure 13 but, while having no lean stratified charge zone (I), defines an enriched homogeneous charge zone (V) lying over possible engine speeds in which non-split injection is made. This type of direct injection-spark ignition engine has no necessity of having a piston formed with a top cavity and provides a reduction in heat loss consequently.

In place of performing the split injection according to the fuel charge zones, the spilt injection may be made while it is monitored that the lean NOx conversion catalyst 34 is in a temperature range higher than, for example, 400?C. In this instance, the temperature of exhaust gas is controlled according to the temperature of lean NOx conversion catalyst 34, so as to prevent the lean NOx conversion catalyst 34 from being over heated. The temperature of lean NOx conversion catalyst 34 may be estimated by the inlet temperature of exhaust gas.

The engine control system of the invention may be employed to control an engine not operative with a lean mixture, such as an engine which is operated with a stoichiometric mixture in a partial loading zone and with an enriched mixture in a full loading zone, and an engine which is operated with a stoichiometric mixture over a full range of loading. Even in these cases, the split injection prevents the lean NOx catalyst from a rise in temperature in excess and it is not always necessary to use the lean NOx conversion catalyst 34 but may replace it with, for example, a three-way catalyst.

## Claims

1. An engine control system for a direct injection-spark ignition type of engine which is equipped with a fuel injector (14) for spraying fuel directly into a combustion chamber (6) and an exhaust system (37) having a catalyst (34) for purifying exhaust gas, and fuel injection control means for dividing a given amount of fuel into two parts and controlling said fuel injector(14) to deliver intermittently said two parts of fuel through early and late split injection respectively in an intake stroke of a cylinder piston (5), **characterized in that**
said fuel injection control means controls said fuel injector (14) so that a midpoint between points at which said early and late split injection are timed respectively to start is before a midpoint of the intake stroke of the cylinder piston, that is to say, at a crank angle of 90 degrees.

2. An engine control system as claimed in claim 1, **characterised by** a lean NOx conversion catalyst (34) for lowering an emission level of nitrogen oxides in exhaust gas at an air fuel ratio of λ > 1, wherein said fuel injection control means controls the engine to make stratified charge combustion in a zone of lower engine loadings and homogeneous charge combustion in a zone other than said lower engine loading zone and performs fuel injection of a given amount of fuel in two parts through early and late split injection, respectively, in an intake stroke of said cylinder piston (5) in said zone other than said lower engine loading zone.

3. An engine control system as claimed in claim 2, wherein in said zone other than said lower engine loading zone, said engine control system controls the engine to operate with a fuel mixture enriched to be λ < 1 while the engine is in a warm condition.

4. An engine control system as claimed in claim 2, wherein in said zone other than said lower engine loading zone, said engine control system controls the engine to operate with a fuel mixture enriched to be λ < 1 while the engine is in a cold condition.

5. An engine control system as claimed in claim 2, wherein said zone other than said lower engine loading zone includes engine operating conditions that the engine starts.

6. An engine control system as claimed in claim 2, further comprising an exhaust gas recirculation system (39), wherein said engine control system causes said exhaust gas recirculation system to admit exhaust gas into an intake air stream introduced into the engine in said zone other than said lower engine loading zone.

7. An engine control system as claimed in claim 6, wherein said exhaust gas recirculation system (39) admits exhaust gas with an exhaust gas recirculation ratio of 10 to 40%.

8. An engine control system as claimed in claim 2, wherein said fuel injector (14) is disposed off a vertical axis of said combustion chamber (4) and positioned to spray fuel in a direction intersecting said vertical axis at an angle.

9. An engine control system as claimed in claim 2, further comprising air stream control means (30) for creating an air stream in said combustion chamber.

10. An engine control system as claimed in claim 2, wherein said fuel injection control means divides a given amount of fuel into two substantially equal parts for said early and late split injection.

11. An engine control system as claimed in claim 1, wherein said fuel injection control means causes said fuel injector (14) to spray a given amount of fuel through said early and late split injection while said engine operating condition monitoring means monitors ordinary engine operating conditions.

12. An engine control system as claimed in claim 1, **characterised by** a lean NOx conversion catalyst (34) for lowering an emission level of nitrogen oxides in exhaust gas at an air fuel ratio of λ > 1 and temperature detection means for detecting a temperature of said lean NOx conversion catalyst (34), wherein said fuel injection control means controls the engine to make stratified charge combustion in a zone of lower engine loadings and homogeneous charge combustion in a zone other than said lower engine loading zone and while said temperature detection means detects a temperature higher than a specified level, divides a given amount of fuel into two parts which are intermittently delivered through early and late split injection, respectively, in an intake stroke of said cylinder piston (5).

13. an engine control system as defined in claim 1, wherein said late split injection is timed to start at a point in on of first and middle divisions of three substantially equal divisions of an intake stroke of said cylinder piston (5).

14. An engine control system as claimed in claim 1, wherein said late split injection is timed to end at a point in one of first and middle divisions of three substantially equal divisions of a intake stroke of said cylinder piston (5) while said engine operating condition monitoring means (27) monitors engine operating conditions in a lower engine speed zone.

15. An engine control system as claimed in claim 1, wherein a midpoint of said late split injection is timed to be at a point before said midpoint of a intake stroke of said cylinder piston (5) at which said cylinder piston attains a maximum down speed.

16. An engine control system as claimed in claim 1, wherein said catalyst is of a lean NOx conversion type.

## Patentansprüche

1. Ein Motor-Regelsystem für einen Direkteinspritzungs-Motor vom Funkenzündungs-Typ, welcher mit einer Kraftstoffeinspritzung (14) ausgerüstet ist, um Kraftstoff direkt in eine Verbrennungskammer (6) hinein zu versprühen; und einem Abgassystem (37), das einen Katalysator (34) zur Reinigung von Abgasen aufweist; und Kraftstoffeinspritzungs-Regelvorrichtungen, um eine gegebene Menge an Kraftstoff in zwei Teile zu teilen und diese Kraftsstoffeinspritzung (14) zu regeln, um diese zwei Teile an Kraftstoff periodisch durch frühe und späte Teileinspritzung entsprechend in einen Ansaughub eines Zylinderkolbens (5) hinein zu liefern; **dadurch gekennzeichnet, daß**
diese Kraftstoffeinspritzungs-Regelvorrichtung diese Kraftstoffeinspritzung (14) so regelt, daß ein Mittelpunkt zwischen Punkten, an welchen entsprechend diese frühe und späte Teileinspritzung zu beginnen terminiert sind, vor einem Mittelpunkt des Ansaughubs des Zylinderkolbens liegt, d.h. bei einem Kurbelwinkel von 90°.

2. Ein Motor-Regelsystem gemäß Anspruch 1, **gekennzeichnet durch** einen mageren NOₓ-Umwandlungskatalysator (34), um einen Emissionspegel von Stickoxiden im Abgas bei einem Luft/Kraftstoff Verhältnis λ > 1 zu erniedrigen; worin diese Kraftstoffeinspritzungs-Regelvorrichtung den Motor regelt, um in einer Zone geringerer Motorbelastungen eine Verbrennung mit geschichteter Ladung vorzunehmen; und Verbrennung mit homogener Ladung in einer anderen Zone als dieser Zone geringerer Motorbelastung; und die eine Kraftstoffeinspritzung einer gegebenen Menge an Kraftstoff in zwei Teilen in einen Ansaughub dieses Zylinderkolbens (5) - in dieser anderen Zone als der Zone geringerer Motorbelastung - entsprechend **durch** frühe und späte Teileinspritzung verrichtet.

3. Ein Motor-Regelsystem gemäßAnspruch 2, in dem dieses Motor-Regelsystem den Motor in dieser anderen Zone als dieser Zone geringerer Motorbelastung regelt, um mit einer auf λ < 1 aufgefetteten Kraftstoffmischung zu arbeiten, während sich der Motor in einem warmen Zustand befindet.

4. Ein Motor-Regelsystem gemäß Anspruch 2, in dem dieses Motor-Regelsystem den Motor in dieser anderen Zone als dieser Zone geringerer Motorbelastung regelt, um mit einer auf λ < 1 aufgefetteten Kraftstoffinischung zu arbeiten, während sich der Motor in einem kalten Zustand befindet.

5. Ein Motor-Regelsystem gemäß Anspruch 2, in dem diese andere Zone als diese Zone geringerer Motorbelastung Motor-Betriebsbedingungen einschließt, daß der Motor startet.

6. Ein Motor-Regelsystem gemäß Anspruch 2, das weiterhin ein Abgas-Rrückführungssystem (39) umfaßt, in dem dieses Motor-Regelsystem dieses Abgas-Rückführungssystem dazu bringt in dieser anderen Zone als dieser Zone geringerer Motorbelastung Abgas in einen AnsaugLuftstrom hinein einzulassen, der in einen Motor hinein eingebracht wird.

7. Ein Motor-Regelsystem gemäß Anspruch 6, in dem dieses Abgas-Rückführungssystem (39) Abgas mit einem Abgas-Rückführungsverhältnis von 10 bis 40% einläßt.

8. Ein Motor-Regelsystem gemäß Anspruch 2, in dem diese Kraftstoffeinspritzung (14) aus einer vertikalen Achse dieser Verbrennungskammer (4) heraus versetzt ist, und positioniert ist um Kraftstoff in einer diese vertikale Achse mit einem Winkel schneidenden Richtung zu versprühen.

9. Ein Motor-Regelsystem gemäß Anspruch 2, das weiterhin eine Luftstrom-Regelvorrichtung (30) umfaßt, um einen Luftstrom in dieser Verbrennungskammer zu schaffen.

10. Ein Motor-Regelsystem gemäß Anspruch 2, in dem diese Kraftstoffeinspritzungs-Regelvorrichtung eine gegebene Menge an Kraftstoff für diese frühe und späte Teileinspritzung in zwei im Wesentlichen gleiche Teile aufteilt.

11. Ein Motor-Regelsystem gemäß Anspruch 1, in dem diese Kraftstoffeinspritzungs-Regelvorrichtung diese Kraftstoffeinspritzung (14) dazu bringt eine gegebene Menge an Kraftstoff durch diese frühe und späte Teileinspritzung zu versprühen, während jene diese Motor-Betriebsbedingung überwachende Vorrichtung gewöhnliche Motor-Betriebsbedingungen überwacht.

12. Ein Motor-Regelsystem gemäß Anspruch 1, **gekennzeichnet durch** einen mageren NOₓ-Umwandlungskatalysator (34), um einen Emissionspegel an Stickoxiden in Abgasen bei einem Luft/Kraftstoff Verhältnis λ > 1 zu erniedrigen, und **durch** Temperatur-Detektionsvorrichtungen, um eine Temperatur dieses mageren NOₓ-Umwandlunaskatalysators (34) zu detektieren; in dem diese Kraftstoffeinspritzungs-Regelvorrichtung den Motor regelt, um in einer Zone geringerer Motorbelastungen eine Verbrennung mit geschichtetet Ladung vorzunehmen, und Verbrennung mit homogener Ladung in einer anderen Zone als dieser Zone geringerer Motorbelastung; und eine gegebene Menge an Kraftstoff in zwei Teile aufteilt, die entsprechend **durch** frühe und späte Teileinspritzung in einen Ansaughub dieses Zylinderkolbens (5) geliefert werden, während diese Temperatur-Detektionsvorrichtung eine Temperatur höher als ein spezifiziertes Niveau detektiert.

13. Ein Motor-Regelsystem gemäß Anspruch 1, in dem diese späte Teileinspritzung terminiert ist um an einem Punkt in einem der ersten oder mittleren Abschnitte von drei im Wesentlichen gleichen Abschnitten eines Ansaughubs dieses Zylinderkolbens (5) zu beginnen.

14. Ein Motor-Regelsystem gemäß Anspruch 1, in dem diese späte Teileinspritzung terminiert ist um an einem Punkt in einem ersten oder mittleren Abschnitte von drei im Wesentlichen gleichen Abschnitten eines Ansaughubs dieses Zylinderkolbens (5) zu enden, während jene diese Motor-Betriebsbedingung überwachende Überwachungsvorrichtung (27) die Motor-Betriebsbedingungen in einer Zone niedrigerer Motordrehzahl überwacht.

15. Ein Motor-Regelsystem gemäß Anspruch 1, in dem ein Mittelpunkt dieser späten Teileinspritzung terminiert um an einem Punkt vor diesem Mittelpunkt eines Ansaughubs dieses Zylinderkolbens (5) zu liegen, an welchem dieser Zylinderkolben eine maximale Abwärtsgeschwindigkeit erreicht.

16. Ein Motor-Regelsystem gemäß Anspruch 1, in dem dieser Katalysator vom mageren NOₓ-Umwandlungstyp ist.

## Revendications

1. Système de commande de moteur destiné à un moteur du type à allumage par étincelle à injection directe qui est équipé d'un injecteur de carburant (4), destiné à pulvériser du carburant directement dans une chambre de combustion (6) et d'un système d'échappement (37) comportant un catalyseur (34) destiné à purifier le gaz d'échappement, et un moyen de commande d'injection de carburant destiné à séparer une quantité donnée de carburant en deux parties et commander ledit injecteur de carburant (14) pour délivrer par intermittence lesdites deux parties de carburant grâce à une injection séparée antérieure et postérieure, respectivement, dans un temps d'admission d'un piston de cylindre (5), **caractérisé en ce que**
ledit moyen de commande d'injection de carburant commande ledit injecteur de carburant (14) de manière à ce qu'un point milieu entre les points auxquels ladite injection antérieure et postérieure sont prévues débuter respectivement, est avant un point milieu du temps d'admission du piston de cylindre, c'est-à-dire à un angle de vilebrequin de 90 degrés.

2. Système de commande de moteur selon la revendication 1, **caractérisé par** un catalyseur de conversion de NOx pauvre (34) destiné à abaisser un niveau d'émission des oxydes d'azote dans le gaz d'échappement à un rapport air carburant λ > 1, où ledit moyen de commande d'injection de carburant commande le moteur pour réaliser une combustion à charge stratifiée dans une zone à couple inférieur du moteur et une combustion à charge homogène dans une zone autre que ladite zone à couple inférieur du moteur et exécute une injection de carburant d'une quantité donnée de carburant en deux parties grâce à une injection séparée antérieure et postérieure, respectivement, dans un temps d'admission dudit piston de cylindre (5) dans ladite zone autre que ladite zone à couple inférieur du moteur.

3. Système de commande de moteur selon la revendication 2, dans lequel, dans ladite zone autre que ladite zone à couple inférieur du moteur, ledit système de commande de moteur commande le moteur pour qu'il fonctionne avec un mélange de carburant enrichi de façon à être λ < 1 pendant que le moteur est dans un état chaud.

4. Système de commande de moteur selon la revendication 2, dans lequel, dans ladite zone autre que ladite zone à couple inférieur du moteur, ledit système de commande du moteur commande le moteur pour qu'il fonctionne avec un mélange de carburant enrichi pour être de λ < 1 alors que le moteur est dans un état froid.

5. Système de commande de moteur selon la revendication 2, dans lequel ladite zone autre que ladite zone à couple inférieur du moteur comprend des conditions de fonctionnement du moteur telles que le moteur démarre.

6. Système de commande de moteur selon la revendication 2, comprenant en outre un système de recirculation de gaz d'échappement (39), dans lequel ledit système de commande de moteur amène ledit système de recirculation de gaz d'échappement à admettre un gaz d'échappement dans un flux d'air d'admission introduit dans le moteur dans ladite zone autre que ladite zone à couple inférieur du moteur.

7. Système de commande de moteur selon la revendication 6, dans lequel ledit système de recirculation de gaz d'échappement (39) admet un gaz d'échappement avec un rapport de recirculation de gaz d'échappement de 10 à 40 %.

8. Système de commande de moteur selon la revendication 2, dans lequel ledit injecteur de carburant (14) est disposé en dehors d'un axe vertical de la chambre de combustion (4), et positionné de façon à pulvériser du carburant dans une direction. recoupant ledit axe vertical en faisant un angle.

9. Système de commande de moteur selon la revendication 2, comprenant en outre un moyen de commande de flux d'air (30) destiné à créer un flux d'air dans ladite chambre de combustion.

10. Système de commande de moteur selon la revendication 2, dans lequel ledit moyen de commande d'injection de carburant sépare une quantité donnée de carburant en deux parties sensiblement égales pour ladite injection séparée antérieure et postérieure.

11. Système de commande de moteur selon la revendication 1, dans lequel ledit moyen de commande d'injection de carburant amène ledit injecteur de carburant (14) à pulvériser une quantité donnée de carburant par l'intermédiaire de ladite injection séparée antérieure et postérieure pendant que ledit moyen de surveillance de condition de fonctionnement du moteur surveille les conditions de fonctionnement ordinaires du moteur.

12. Système de commande de moteur selon la revendication 1, **caractérisé par** un catalyseur de conversion de NOx pauvre (34) destiné à abaisser un niveau d'émission des oxydes d'azote dans le gaz d'échappement à un rapport air carburant λ > 1, et un moyen de détection de température destiné à détecter une température dudit catalyseur de conversion de NOx pauvre (34), dans lequel ledit moyen de commande d'injection de carburant commande le moteur pour réaliser une combustion à charge stratifiée dans une zone à couple inférieur du moteur et une combustion à charge homogène dans une zone autre que ladite zone à couple inférieur du moteur et pendant que ledit moyen de détection de température détecte une température plus élevée qu'un niveau spécifié, sépare une quantité donnée de carburant en deux parties qui sont délivrées par intermittence grâce à une injection séparée antérieure et postérieure, respectivement, dans un temps d'admission dudit piston de cylindre (5).

13. Système de commande de moteur selon la revendication 1, dans lequel ladite injection séparée postérieure est prévue débuter à un point sur l'une des divisions première et intermédiaire de trois divisions sensiblement égales d'un temps d'admission dudit piston de cylindre (5).

14. Système de commande de moteur selon la revendication 1, dans lequel ladite injection séparée postérieure est prévue se terminer à un point de l'une des divisions première et intermédiaire de trois divisions sensiblement égales d'un temps d'admission dudit piston de cylindre (5), alors que ledit moyen de surveillance de condition de fonctionnement du moteur (27) surveille les conditions de fonctionnement du moteur dans une zone à régime inférieur du moteur.

15. Système de commande de moteur selon la revendication 1, dans lequel un point milieu de ladite injection séparée postérieure est prévu être à un point avant ledit point milieu d'un temps d'admission dudit piston de cylindre (5) auquel ledit piston de cylindre atteint une vitesse vers le bas maximum.

16. Système de commande de moteur selon la revendication 1, dans lequel ledit catalyseur est du type à conversion de NOx pauvre.
